# EUROPÄISCHE PATENTSCHRIFT

(11) **EP 2 632 019 B1**
(45) Veröffentlichungstag und Bekanntmachung des Hinweises auf die Patenterteilung: **08.04.2015**
(21) Anmeldenummer: 13152533.9
(22) Anmeldetag: 24.01.2013
(51) Int. Cl.: H01M 2/00, B60L 11/18

(54) **Batteriesteuerungsvorrichtung**
Battery control device
Dispositif de commande de batterie

(30) Priorität: 24.02.2012 EP 12156846
(43) Veröffentlichungstag der Anmeldung: 28.08.2013
(73) Patentinhaber: MAGNA STEYR Battery Systems GmbH & Co OG, 8141 Zettling (AT)
(72) Erfinder: Hausberger, Ingo, 9433 St. Andrä (AT); Klobasa, Roland, 8051 Graz (AT); Lettner, Markus, 8521 Wettmannstätten (AT); Trsek, Martin, 8010 Graz (AT)
(74) Vertreter: Zangger, Bernd

(56) Entgegenhaltungen:
- US-A- 5 850 351
- US-A1- 2007 182 377
- US-A1- 2010 173 180

## Beschreibung

Die vorliegende Erfindung betrifft eine Batteriesteuerungsvorrichtung mit einem mehrere Zellen umfassenden Batteriesystem, einer ersten Elektronikeinheit und einer zweiten Elektronikeinheit, wobei insbesondere das Massepotential der zweiten Elektronikeinheit an ein Potential des Batteriesystems angeschlossen ist und wobei die erste Elektronikeinheit und die zweite Elektronikeinheit zum Austausch von Informationen über eine Kommunikationsverbindung in Verbindung stehen.

Derartige Vorrichtungen werden beispielsweise für Elektro- und Hybridfahrzuge genutzt, um Hochvolt-Batteriesysteme, die üblicherweise eine Vielzahl von Batteriezellen umfassen, überwachen und steuern zu können. Hierzu kann eine zentrale erste Elektronikeinheit als Batteriesteuerungseinheit (Battery Management Unit, BMU) ausgeführt sein, die insbesondere den Gesamtzustand des Batteriesystems überwacht und beispielsweise einen Ladungsausgleich zwischen den Batteriezellen steuert. Zusätzlich werden häufig als zweite Elektronikeinheiten lokale Zellüberwachungseinheiten (Cell Supervisory Controler, CSC) eingesetzt, die beispielsweise für jede einzelne Batteriezelle oder für Gruppen von Batteriezellen Zustände wie Zellspannung und Temperatur erfassen und an die Batteriesteuerungseinheit kommunizieren. Die Massepotentiale der Zellüberwachungseinheiten können dabei mit dem Batteriesystem verbunden sein. Die Kommunikationsverbindung zwischen der Batteriesteuerungseinheit und den Zellüberwachungseinheiten ist üblicherweise als Controler Area Network-Bus (CAN-Bus) Verbindung ausgeführt, da dieser Verbindungstyp auch für längere Kommunikationswege eine zuverlässige Kommunikation gewährleistet. Jedoch sind für die Verwendung eines CAN-Busses sowohl auf Seite der Batteriesteuerungseinheit als auch auf Seite der Zellüberwachungseinheiten komplexe Sende-/Empfangsvorrichtungen zur Umsetzung des Protokolls erforderlich.

Als Kommunikationsverbindung zwischen Elektronikeinheiten ist weiterhin der Serial Peripheral Interface-Bus (SPI-Bus) bekannt, der mit weniger Aufwand zu implementieren ist, sich jedoch zur Verbindung von räumlich weiter entfernt liegenden Elektronikeinheiten wenig eignet, da eine SPI-Bus-Verbindung anfällig für Störsignale, wie insbesondere Gleichtaktstörungen ist.

Eine Batterieüberwachungs- und Steuerungsvorrichtung ist aus der DE 10 2010 016 175 A1 bekannt, wobei zwischen einem Systemcontroller und einem Batterieüberwachungsmodul ein primäres und ein sekundäres Verbindungsglied vorgesehen sind. Das primäre Verbindungsglied kann durch ein SPI-Verbindungsglied gebildet sein. Bei einem Ausfall oder Reduktion der seriellen Verbindung übernimmt das sekundäre Verbindungsglied, das als UART(Universal Asynchronous Receiver/Transmitter)-Verbindungsglied ausgebildet ist, die Kommunikationsaufgabe.

Aus der US 2010/173180 A1 ist eine Batteriesteuerungsvorrichtung nach dem Oberbegriff des Anspruchs 1 bekannt, mit einer Batterie die mehrere Zellen umfasst und mit mehreren Vorrichtungen zur Erfassung der Stati der Zellen die an die Batterie gekoppelt sind und mit einer Kontrolleinheit die mit einer ersten der Vorrichtungen verbunden ist. Die Kontrolleinheit kann mit einer Ziel-Vorrichtung über einen Standardweg und über einen Ersatzweg kommunizieren.

Eine Batteriemanagementvorrichtung ist auch aus der US 5 850 351 A bekannt, wobei eine Anzahl von Batterien durch eine Anzahl von Batterieüberwachungsmodulen überwacht wird, wobei jeder Batterie ein Batterieüberwachungsmodul zugeordnet ist.

Aus der US 2007/182377 A1 ist schließlich ein Überwachungssystem bekannt, zur Überwachung der Spannung einer Anzahl von Batterien, wobei jede Batterie mehrere Zellen umfasst. Jeder Batterie ist eine Überwachungseinheit zugeordnet. Eine erste und eine zweite Überwachungseinheit messen dabei die selbe Zelle einer Batterie. Die Überwachungseinheiten sind in einer Kette angeordnet, wobei benachbarte Überwachungseinheiten über Kommunikationsschnittstellen verbunden sind.

Es ist eine Aufgabe der Erfindung, Batteriesteuerungsvorrichtungen der genannten Art zu verbessern und insbesondere eine zuverlässige und kostengünstige Verbindung zwischen einer ersten Elektronikeinheit und einer zweiten Elektronikeinheit einer Batteriesteuerungsvorrichtung auch bei längeren Kommunikationswegen zu ermöglichen.

Die Lösung der Aufgabe erfolgt durch eine Batteriesteuerungsvorrichtung mit einem mehrere Zellen umfassenden Batteriesystem, einer ersten Elektronikeinheit und einer zweiten Elektronikeinheit, wobei das Massepotential der zweiten Elektronikeinheit an ein Potential des Batteriesystems angeschlossen ist, wobei die erste Elektronikeinheit und die zweite Elektronikeinheit zum Austausch von Informationen über eine Kommunikationsverbindung in Verbindung stehen, wobei die Kommunikationsverbindung eine galvanische Trennung aufweist, wobei die Kommunikationsverbindung eine Kommunikationsleitung umfasst, wobei die Kommunikationsleitung zumindest abschnittsweise eine elektromagnetische Schirmung aufweist, wobei die elektromagnetische Schirmung an das Massepotential der zweiten Elektronikeinheit angeschlossen ist. Erfindungsgemäß ist zwischen der ersten Elektronikeinheit und der zweiten Elektronikeinheit eine Kommunikationsleitung vorgesehen, die elektromagnetisch abgeschirmt ausgeführt ist, und zusätzlich eine galvanische Trennung zwischen den Elektronikeinheiten. Die elektromagnetische Abschirmung ist so ausgeführt, dass die elektrische Schirmung der Kommunikationsleitung an das Massepotential der zweiten Elektronikeinheit angeschlossen ist, welches selbst wieder an ein Potential des Batteriesystems angeschlossen ist. Üblicherweise werden elektrische Abschirmungen mit der größten lokal verfügbaren elektrisch leitenden Masse verbunden, das wäre in einer Anordnung in einem Fahrzeug beispielsweise die Karosserie des Fahrzeuges. Es hat sich gezeigt, dass eine Anbindung der Schirmung an das galvanisch getrennte Potential der zweiten Elektronikeinheit, also beispielsweise einer Zellüberwachungseinheit, sowohl zu einer deutlich verbesserten Abschirmung der Kommunikationsleitung aufgrund niedrigerer Spannungsdifferenzen zwischen Kommunikationsleitung und Schirmung führt, als auch zu geringeren Störungen von der Kommunikationsleitung auf das Fahrzeug. Hierdurch ist es möglich auch über längere Verbindungswege eine ungestörte Kommunikation zwischen den Elektronikeinheiten über beispielsweise eine SPI-Bus Verbindung zu gewährleisten.

Vorteilhaft ist die die elektromagnetische Schirmung an beiden Enden an das Massepotential der zweiten Elektronikeinheit angeschlossen.

In einer bevorzugten Ausführungsform sind die erste und die zweite Elektronikeinheit von einem ersten und zweiten Steuergerät gebildet.

Bevorzugt ist die erste Elektronikeinheit eine Batteriesteuerungseinheit (Battery Management Unit, BMU). Die Batteriesteuerungseinheit ist als übergeordnetes Kontroll- und Steuersystem für die Überwachung und Steuerung der Batteriezellen in ihrer Gesamtheit, also des gesamten Batteriesystems eingerichtet.

Bevorzugt ist die zweite Elektronikeinheit eine Zellüberwachungseinheit (Cell Supervisory Controler, CSC), insbesondere eine Zellspannungsüberwachungseinheit. Die Zellüberwachungseinheit überwacht und/oder steuert eine Batterieeinheit, insbesondere eine einzelne Batteriezelle oder eine Gruppe von Batteriezellen und kommuniziert bevorzugt mit einer übergeordneten Batteriesteuerungseinheit.

Das Batteriesystem kann insbesondere ein Hochvolt-Batteriesystem eines Fahrzeuges sein, insbesondere zum Antrieb des Fahrzeugs.

Die Energieversorgung der zweiten Elektronikeinheit kann über das Batteriesystem erfolgen. Die erste Elektronikeinheit kann beispielsweise von einem 12V-Bordnetz eines Fahrzeuges gespeist werden.

Bevorzugt ist die galvanische Trennung zwischen der ersten Elektronikeinheit und der Kommunikationsleitung angeordnet. Das Potential der zweiten Elektronikeinheit erstreckt sich über die Kommunikationsleitung bis in einen Bereich nahe der ersten Elektronikeinheit. Auf einer Baueinheit welche die erste Elektronikeinheit umfasst, kann ein gesonderter Bereich ausgebildet sein, der Komponenten auf dem Potential der zweiten Elektronikeinheit beherbergt. Der gesonderte Bereich ist dann von anderen Bereichen der Baueinheit und insbesondere von der ersten Elektronikeinheit galvanisch getrennt.

Bevorzugt ist die galvanische Trennung durch einen Optokoppler oder durch induktive oder kapazitive Übertragung gebildet.

Filterelemente sind bevorzugt zwischen Kommunikationsleitung und erster Elektronikeinheit und/oder zwischen Kommunikationsleitung und zweiter Elektronikeinheit angeordnet. Besonders bevorzugt sind Filterelemente, vor allem bei bidirektionalen Kommunikationsverbindungen, beiderseits der Kommunikationsleitung angeordnet. Durch geeignete Filterelemente werden vor allem Spannungsänderungen und Stromänderungen in der Kommunikationsleitung gedämpft und so Störungen benachbarter Kommunikationsleitungen vermindert.

Die Filterelemente können Längswiderstände und Ableitkondensatoren umfassen, die insbesondere beiderseits der Schirmung angeordnet sind und die Tiefpassfilter bilden können.

Die Filterelemente können auch Induktivitäten umfassen, die ebenfalls bevorzugt beiderseits der Schirmung angeordnet sind, wodurch Gleichtaktstörungen in der Kommunikationsleitung verringert werden.

Bevorzugt erfolgt der Austausch von Informationen über die Kommunikationsverbindung über einen Serial Peripheral Interface-Bus (SPI).

Bevorzugt weist die Kommunikationsleitung eine Länge von mehr als 10 cm, insbesondere mehr als 20 cm, insbesondere mehr als 50 cm auf. Dadurch ist eine räumlich getrennte Anordnung der ersten von der zweiten Elektronikeinheit möglich, eine sichere Kommunikationsverbindung zwischen den Elektronikeinheiten jedoch auch über größere Distanzen gewährleistet.

Nach einer bevorzugten Ausführungsform umfasst die Batteriesteuerungsvorrichtung mehrere zweite Elektronikeinheiten, also insbesondere mehrere Zellüberwachungseinheiten, die zumindest teilweise untereinander verbunden sind, wobei zumindest eine jedoch bevorzugt nicht alle der zweiten Elektronikeinheiten mit der ersten Elektronikeinheit in direkter Kommunikationsverbindung stehen. Die zweiten Elektronikeinheiten können sog. "Daisy-Chains" bilden, wobei nur eine oder manche der zweiten Elektronikeinheiten mit der, üblicherweise einzigen, ersten Elektronikeinheit verbunden sind. Die Verbindung der zweiten Elektronikeinheiten untereinander erfolgt bevorzugt potentialgetrennt, beispielsweise durch Kapazitäten in den Verbindungsleitungen, und verwendet bevorzugt ein differentielles Bus-System.

Wenn die Batteriesteuerungsvorrichtung mehrere zweite Elektronikeinheiten umfasst, stehen bevorzugt zumindest zwei der zweiten Elektronikeinheiten mit der ersten Elektronikeinheit in direkter Kommunikationsverbindung, wobei diese direkten Kommunikationsverbindungen wie oben beschrieben ausgeführt sein können, also insbesondere jeweils galvanisch getrennt, jeweils abgeschirmt und/oder jeweils mit Filtern ausgestattet sein können. Der Einsatz mehrerer, mit der ersten Elektronikeinheit direkt verbundener, zweiter Elektronikeinheiten ist vor allem vorteilhaft, um trotz erforderlicher Störungsminderungsmaßnahmen, wie Filter, und der damit verbundenen niedrigen Datenübertragungsrate, eine insgesamt hohe Datenübertragungsrate zwischen erster Elektronikeinheit und zweiten Elektronikeinheiten sicher zu stellen.

Die Massepotentiale der zweiten Elektronikeinheiten sind bevorzugt an verschieden hohe Potentiale des Batteriesystems angeschlossen, so dass die Massepotentiale der zweiten Elektronikeinheiten voneinander verschieden sind. Hierdurch weisen auch die Schirmungen der verschiedenen Kommunikationsleitungen unterschiedliche Massepotentiale auf. Durch die Ausführung der Schirmungen mit jeweils lokal angepassten Massenpotentialen wird eine optimale Abschirmung von elektromagnetischen Störungen erreicht.

Weiterbildungen der Erfindung sind in den abhängigen Ansprüchen, der Beschreibung sowie den beigefügten Zeichnungen angegeben.

Die Erfindung wird im Folgenden beispielhaft unter Bezugnahme auf die Zeichnungen beschrieben.
- Fig. 1: ist eine schematische Darstellung einer erfindungsgemäßen Batteriesteuerungsvorrichtung.
- Fig. 2: ist eine schematische Darstellung gem. Fig. 1, mit zusätzlichen Details der Batteriesteuerungsvorrichtung.
- Fig. 3 bis Fig. 5: sind schematische Darstellungen von weiteren erfindungsgemäßen Batteriesteuerungsvorrichtungen.

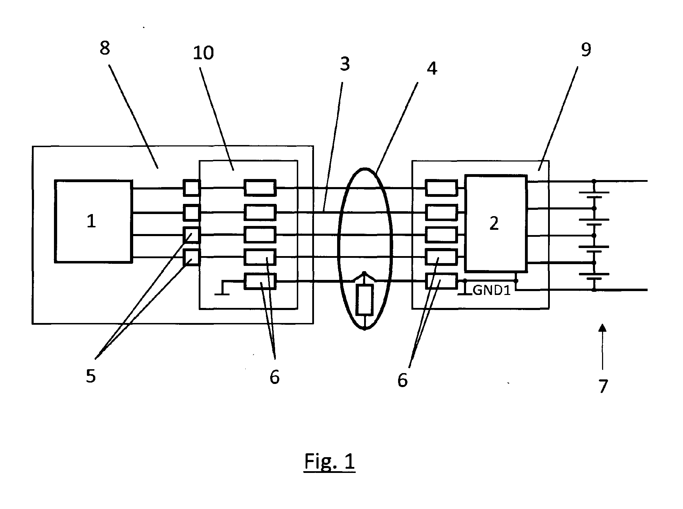

In Fig. 1 ist eine erfindungsgemäße Batteriesteuerungsvorrichtung dargestellt, mit einer ersten Elektronikeinheit 1 und einer zweiten Elektronikeinheit 2, die über eine Kommunikationsverbindung miteinander verbunden sind. Die zweite Elektronikeinheit 2 wird durch eine Zellüberwachungseinheit gebildet, die eine oder mehrere Batteriezellen eines Batteriesystems 7 überwacht und/oder steuert. Die erste Elektronikeinheit 1 wird von einer Batteriesteuerungseinheit gebildet. Die Kommunikationsverbindung umfasst eine Kommunikationsleitung 3, die als SPI-Bus-Verbindung mit vier Leitungen ausgeführt ist. Zusätzlich zu der vier Leitungen umfassenden Kommunikationsleitung 3 kann die Kommunikationsverbindung auch eine oder mehrere Steuerleitungen umfassen. Derartige Steuerleitungen sind beispielsweise als Enable/Disable-Leitungen ausgeführt, um die Elektronikeinheit 2 zu aktivieren, bzw. deaktivieren. Dadurch kann beispielsweise der Ruhestromverbrauch der Elektronikeinheit 2 verringert werden. Der Übersichtlichkeit halber sind derartige Steuerleitungen nicht dargestellt. Eine galvanische Trennung 5 ist zwischen der ersten Elektronikeinheit 1 und der Kommunikationsleitung 3 angeordnet, wobei die galvanische Trennung 5 beispielsweise als Optokoppler ausgeführt ist. Die Kommunikationsleitung 3 ist durch eine Schirmung 4 von elektromagnetischen Störungen geschützt. Die Schirmung 4 ist an ihren beiden Enden an das Massepotential der zweiten Elektronikeinheit GND1 angebunden. Dieses Massepotential GND1 wird von der zweiten Elektronikeinheit 2 am Batteriesystem 7 abgegriffen und erstreckt sich über eine Masseleitung der Kommunikationsleitung 3 bis in einen gesonderten Bereich 10, der auf dem Potential der zweiten Elektronikeinheit 2 liegt und der in einer Baueinheit 8, welche die erste Elektronikeinheit 1 und die galvanische Trennung 5 umfasst, ausgebildet ist. Sowohl zwischen galvanischer Trennung 5 und Kommunikationsleitung 3, im gesonderten Bereich 10 der Baueinheit 8, als auch auf der Baueinheit 9, die die zweite Elektronikeinheit 2 umfasst, sind Filterelemente 6 angeordnet.

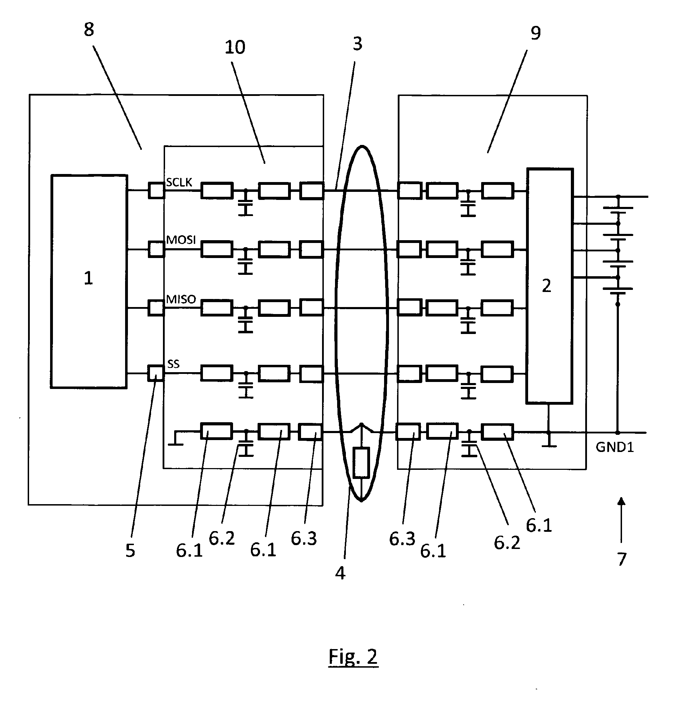

Wie in der Fig. 2 genauer zu sehen ist, umfassen die Filterelemente 6 beiderseits der Kommunikationsleitung 3 sowohl ohmsche Widerstände 6.1, als auch Kapazitäten 6.2, beispielsweise Filterkondensatoren der Datenleitungen gegen das Massepotential GND1, und Induktivitäten 6.3, beispielsweise Ferrite.

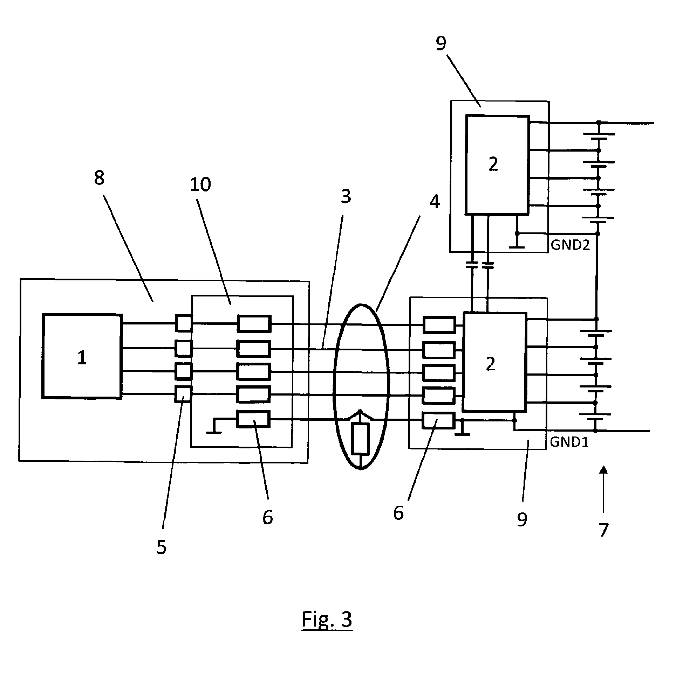

Wie in Fig. 3 dargestellt, kann eine weitere zweite Elektronikeinheit 2, insbesondere eine weitere Zellüberwachungseinheit direkt mit einer zweiten Elektronikeinheit 2 verbunden sein, um so eine "Daisy-Chain" zu bilden. Die Kommunikation der weiteren zweiten Elektronikeinheit 2 mit der ersten Elektronikeinheit 1 erfolgt in dieser Ausführungsform indirekt über die Kommunikationsverbindung 3 der im der Fig. 3 unten dargestellten zweiten Elektronikeinheit 2. Die Massepotential GND1, GND2 der beiden zweiten Elektronikeinheiten 2 sind an unterschiedliche Potentiale des Batteriesystems angebunden.

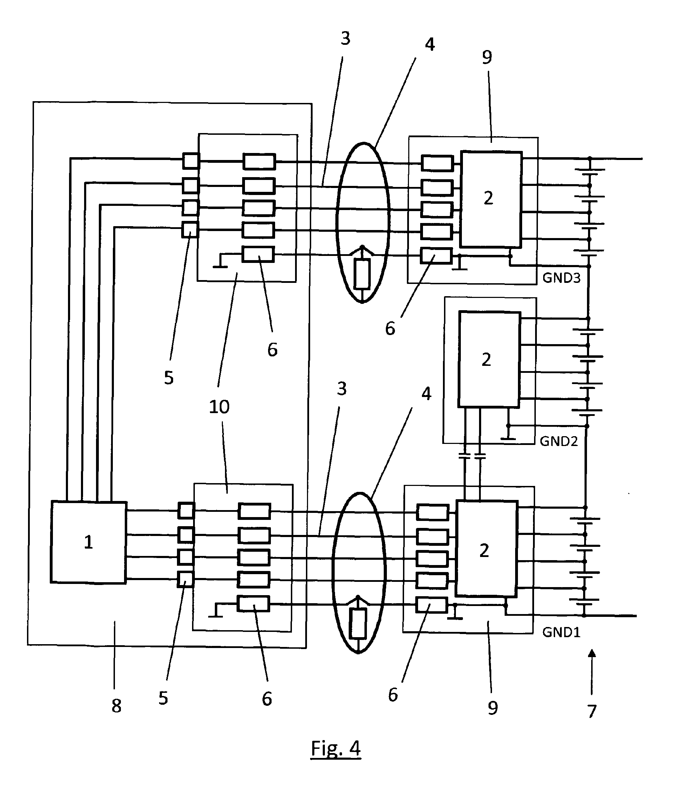

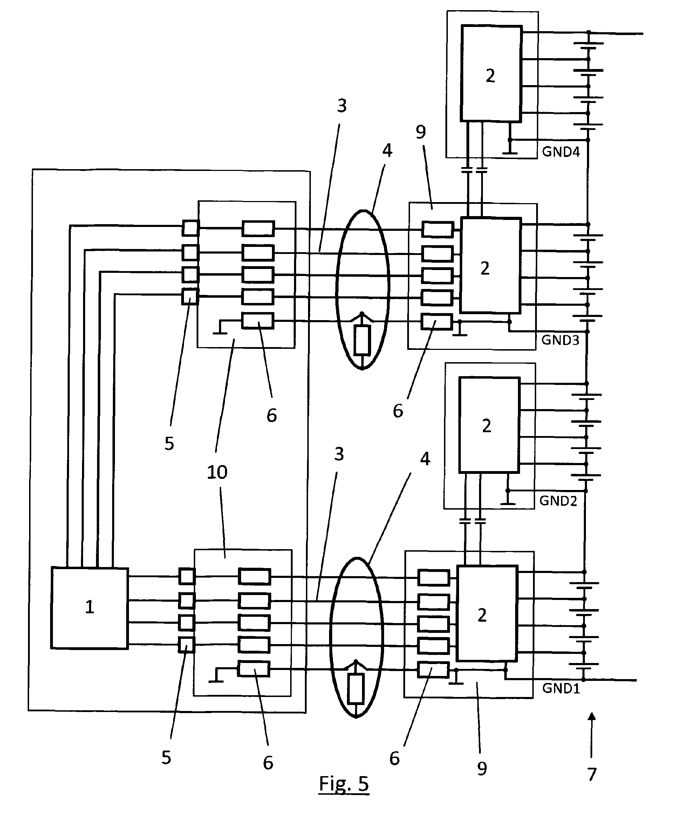

Wie aus den Ausführungsbeispielen der Fig. 4 und Fig. 5 ersichtlich, können auch mehrere zweite Elektronikeinheiten 2 über jeweils eine eigene, direkte Kommunikationsleitung 3 mit der Batteriesteuerungseinheit verbunden sein. Dabei ist jede Kommunikationsleitung 3 über eine eigene Schirmung 4 elektromagnetisch abgeschirmt, wobei jede Schirmung 4 an ihren beiden Enden an das jeweilige Massepotential GND1 bzw. GND3 ihrer zweiten Elektronikeinheit 2 angebunden ist.

Die Erfindung ermöglicht somit eine Batteriesteuerungsvorrichtung mit einer zuverlässigen und kostengünstigen Verbindung zwischen einer ersten Elektronikeinheit und einer zweiten Elektronikeinheit auch bei längeren Kommunikationswegen auszustatten.

### Bezugszeichenliste

- 1: erste Elektronikeinheit
- 2: zweite Elektronikeinheit
- 3: Kommunikationsleitung
- 4: Schirmung
- 5: galvanische Trennung
- 6: Filterelemente
- 6.1: Widerstand
- 6.2: Kapazität
- 6.3: Induktivität
- 7: Batteriesystem
- 8: Baueinheit
- 9: Baueinheit
- 10: gesonderter Bereich

- GND1, GND2, GND3, GND4: Massepotentiale

- SCLK, MOSI, MISO, SS: Leitungen der SPI-Bus Verbindung

## Patentansprüche

1. Batteriesteuerungsvorrichtung mit einem mehrere Zellen umfassenden Batteriesystem (7), einer ersten Elektronikeinheit (1) und einer zweiten Elektronikeinheit (2), wobei das Massepotential (GND1) der zweiten Elektronikeinheit (2) an ein Potential des Batteriesystems (7) angeschlossen ist, wobei die erste Elektronikeinheit (1) und die zweite Elektronikeinheit (2) zum Austausch von Informationen über eine Kommunikationsverbindung in Verbindung stehen, wobei die Kommunikationsverbindung eine galvanische Trennung (5) aufweist, wobei die Kommunikationsverbindung eine Kommunikationsleitung (3) umfasst,
**dadurch gekennzeichnet,**
**dass** die Kommunikationsleitung (3) zumindest abschnittsweise eine elektromagnetische Schirmung (4) aufweist,
wobei die elektromagnetische Schirmung (4) an das Massepotential (GND1) der zweiten Elektronikeinheit (2) angeschlossen ist.

2. Batteriesteuerungsvorrichtung nach Anspruch 1,
**dadurch gekennzeichnet, dass** die erste Elektronikeinheit (1) eine Batteriesteuerungseinheit ist.

3. Batteriesteuerungsvorrichtung nach Anspruch 1 oder 2,
**dadurch gekennzeichnet, dass** die zweite Elektronikeinheit (2) eine Zellüberwachungseinheit ist.

4. Batteriesteuerungsvorrichtung nach zumindest einem der vorstehenden Ansprüche,
**dadurch gekennzeichnet, dass** die galvanische Trennung (5) zwischen der ersten Elektronikeinheit (1) und der Kommunikationsleitung (3) angeordnet ist.

5. Batteriesteuerungsvorrichtung nach zumindest einem der vorstehenden Ansprüche,
**dadurch gekennzeichnet, dass** die galvanische Trennung (5) durch einen Optokoppler oder durch induktive oder kapazitive Übertragung gebildet ist.

6. Batteriesteuerungsvorrichtung nach zumindest einem der vorstehenden Ansprüche,
**dadurch gekennzeichnet, dass** sich das Massepotential (GND1) der zweiten Elektronikeinheit (2) über die Kommunikationsleitung (3) bis in einen gesonderter Bereich (10) erstreckt, der auf einer Baueinheit (8) ausgebildet ist, wobei die Baueinheit (8) die erste Elektronikeinheit (1) umfasst, wobei der gesonderte Bereich (10) insbesondere Komponenten mit dem Massepotential (GND1) der zweiten Elektronikeinheit (2) beherbergt.

7. Batteriesteuerungsvorrichtung nach zumindest einem der vorstehenden Ansprüche,
**dadurch gekennzeichnet, dass** Filterelemente (6) zwischen Kommunikationsleitung (3) und erster Elektronikeinheit (1) und/oder zwischen Kommunikationsleitung (3) und zweiter Elektronikeinheit (2) angeordnet sind.

8. Batteriesteuerungsvorrichtung nach Anspruch 7,
**dadurch gekennzeichnet, dass** die Filterelemente (6) beiderseits der Schirmung (4) Längswiderstände (6.1) , und Ableitkondensatoren (6.2) umfassen.

9. Batteriesteuerungsvorrichtung nach Anspruch 7 oder 8,
**dadurch gekennzeichnet, dass** die Filterelemente (6) beiderseits der Schirmung (4) Induktivitäten (6.3) umfassen.

10. Batteriesteuerungsvorrichtung nach zumindest einem der vorstehenden Ansprüche,
**dadurch gekennzeichnet, dass** der Austausch von Informationen über die Kommunikationsverbindung über einen Serial Peripheral Interface-Bus (SPI) erfolgt.

11. Batteriesteuerungsvorrichtung nach zumindest einem der vorstehenden Ansprüche,
**dadurch gekennzeichnet, dass** die Kommunikationsleitung (3) eine Länge von mehr als 10 cm, insbesondere mehr als 20 cm, insbesondere mehr als 50 cm aufweist.

12. Batteriesteuerungsvorrichtung nach zumindest einem der vorstehenden Ansprüche,
**dadurch gekennzeichnet, dass** die Batteriesteuerungsvorrichtung mehrere zweite Elektronikeinheiten (2) umfasst, die zumindest teilweise untereinander verbunden sind, wobei zumindest eine jedoch bevorzugt nicht alle der zweiten Elektronikeinheiten (2) mit der ersten Elektronikeinheit (1) in direkter Kommunikationsverbindung mit Merkmalen nach zumindest einem der vorstehenden Ansprüche stehen.

13. Batteriesteuerungsvorrichtung nach zumindest einem der vorstehenden Ansprüche,
**dadurch gekennzeichnet, dass** die Batteriesteuerungsvorrichtung mehrere zweite Elektronikeinheiten (2) umfasst, wobei zumindest zwei der zweiten Elektronikeinheiten (2) mit der ersten Elektronikeinheit (1) in direkter Kommunikationsverbindung mit Merkmalen nach zumindest einem der vorstehenden Ansprüche stehen.

14. Batteriesteuerungsvorrichtung nach einem der Ansprüche 12 oder 13,
**dadurch gekennzeichnet, dass** die Massepotentiale (GND1, GND2, GND3, GND4) der zweiten Elektronikeinheiten (2) an verschiedene Potentiale des Batteriesystems (7) angeschlossen sind.

## Claims

1. Battery control device having a battery system (7) comprising a plurality of cells, a first electronic unit (1) and a second electronic unit (2), the earth potential (GND1) of the second electronic unit (2) being connected to a potential of the battery system (7), the first electronic unit (1) and the second electronic unit (2) being connected via a communications link for the purpose of interchanging information, the communications link having DC isolation (5), and the communications link comprising a communication line (3),
**characterized in that**
the communication line (3) has electromagnetic screening (4) at least in sections,
the electromagnetic screening (4) being connected to the earth potential (GND1) of the second electronic unit (2).

2. Battery control device according to Claim 1, **characterized in that** the first electronic unit (1) is a battery control unit.

3. Battery control device according to Claim 1 or 2, **characterized in that** the second electronic unit (2) is a cell monitoring unit.

4. Battery control device according to at least one of the preceding claims,
**characterized in that** the DC isolation (5) is arranged between the first electronic unit (1) and the communication line (3).

5. Battery control device according to at least one of the preceding claims,
**characterized in that** the DC isolation (5) is formed by an optocoupler or by inductive or capacitive transmission.

6. Battery control device according to at least one of the preceding claims,
**characterized in that** the earth potential (GND1) of the second electronic unit (2) extends, via the communication line (3), into a separate region (10) which is formed on a structural unit (8), the structural unit (8) comprising the first electronic unit (1), and the separate region (10) accommodating, in particular, components having the earth potential (GND1) of the second electronic unit (2).

7. Battery control device according to at least one of the preceding claims,
**characterized in that** filter elements (6) are arranged between the communication line (3) and the first electronic unit (1) and/or between the communication line (3) and the second electronic unit (2).

8. Battery control device according to Claim 7,
**characterized in that** the filter elements (6) on both sides of the screening (4) comprise series resistors (6.1) and bypass capacitors (6.2).

9. Battery control device according to Claim 7 or 8, **characterized in that** the filter elements (6) on both sides of the screening (4) comprise inductances (6.3).

10. Battery control device according to at least one of the preceding claims,
**characterized in that** information is interchanged via the communications link using a serial peripheral interface bus (SPI).

11. Battery control device according to at least one of the preceding claims,
**characterized in that** the communication line (3) has a length of more than 10 cm, in particular more than 20 cm, in particular more than 50 cm.

12. Battery control device according to at least one of the preceding claims,
**characterized in that** the battery control device comprises a plurality of second electronic units (2) which are at least partially connected to one another, at least one, but preferably not all, of the second electronic units (2) having a direct communications link to the first electronic unit (1), which communications link has features according to at least one of the preceding claims.

13. Battery control device according to at least one of the preceding claims,
**characterized in that** the battery control device comprises a plurality of second electronic units (2), at least two of the second electronic units (2) having a direct communications link to the first electronic unit (1), which communications link has features according to at least one of the preceding claims.

14. Battery control device according to either of Claims 12 and 13,
**characterized in that** the earth potentials (GND1, GND2, GND3, GND4) of the second electronic units (2) are connected to different potentials of the battery system (7).

## Revendications

1. Dispositif de commande de batterie avec un système de batterie (7) comprenant plusieurs cellules, avec une première unité électronique (1) et une deuxième unité électronique (2), le potentiel de masse (GND1) de la deuxième unité électronique (2) étant raccordé à un potentiel du système de batterie (7), la première unité électronique (1) et la deuxième unité électronique (2) étant reliées pour échanger des informations via une liaison de communication, la liaison de communication comportant une séparation (5) galvanique, la liaison de communication comprenant un câble de communication (3) ;
**caractérisé en ce que** :
le câble de communication (3) comporte au moins en partie un blindage électromagnétique (4) ;
le blindage électromagnétique (4) étant raccordé au potentiel de masse (GND1) de la deuxième unité électronique (2).

2. Dispositif de commande de batterie selon la revendication 1, **caractérisé en ce que** la première unité électronique (1) est une unité de commande de batterie.

3. Dispositif de commande de batterie selon la revendication 1 ou 2, **caractérisé en ce que** la deuxième unité électronique (2) est une unité de surveillance de cellule.

4. Dispositif de commande de batterie selon au moins l'une quelconque des revendications précédentes, **caractérisé en ce que** la séparation galvanique (5) est disposée entre la première unité électronique (1) et le câble de communication (3).

5. Dispositif de commande de batterie selon au moins l'une quelconque des revendications précédentes, **caractérisé en ce que** la séparation galvanique (5) est formée par un coupleur optique ou par transmission inductive ou capacitive.

6. Dispositif de commande de batterie selon au moins l'une quelconque des revendications précédentes, **caractérisé en ce que** le potentiel de masse (GND1) de la deuxième unité électronique (2) s'étend au-delà du câble de communication (3) jusque dans une zone (10) séparée réalisée sur une unité de construction (8), l'unité de construction (8) comprenant la première unité électronique (1), la zone (10) séparée hébergeant notamment des composants avec le potentiel de masse (GND1) de la deuxième unité électronique (2).

7. Dispositif de commande de batterie selon au moins l'une quelconque des revendications précédentes, **caractérisé en ce que** les éléments de filtre (6) sont disposés entre le câble de communication (3) et la première unité électronique (1) et/ou entre le câble de communication (3) et la deuxième unité électronique (2).

8. Dispositif de commande de batterie selon la revendication 7, **caractérisé en ce que** les éléments de filtre (6) comprennent des deux côtés du blindage (4) des résistances longitudinales (6.1) et des condensateurs de dérivation (6.2).

9. Dispositif de commande de batterie selon la revendication 7 ou 8, **caractérisé en ce que** les éléments de filtre (6) comprennent des deux côtés du blindage (4) des inductivités (6.3).

10. Dispositif de commande de batterie selon au moins l'une quelconque des revendications précédentes, **caractérisé en ce que** l'échange d'informations via la liaison de communication se produit via un bus de type SPI (Serial Peripheral Interface).

11. Dispositif de commande de batterie selon au moins l'une quelconque des revendications précédentes, **caractérisé en ce que** le câble de communication (3) présente une longueur supérieure à 10 cm, notamment supérieure à 20 cm, notamment supérieure à 50 cm.

12. Dispositif de commande de batterie selon au moins l'une quelconque des revendications précédentes, **caractérisé en ce que** le dispositif de commande de batterie comprend plusieurs deuxièmes unités électroniques (2) reliées au moins en partie entre elles, au moins une unité, toutefois de façon préférée pas toutes les deuxièmes unités électroniques (2), étant reliée en communication directe avec la première unité électronique (1) avec les caractéristiques selon au moins l'une quelconque des revendications précédentes.

13. Dispositif de commande de batterie selon au moins l'une quelconque des revendications précédentes, **caractérisé en ce que** le dispositif de commande de batterie comprend plusieurs deuxièmes unités électroniques (2), au moins deux des deuxièmes unités électroniques (2) étant en liaison de communication directe avec la première unité électronique (1) avec les caractéristiques selon au moins l'une quelconque des revendications précédentes.

14. Dispositif de commande de batterie selon l'une quelconque des revendications 12 ou 13, **caractérisé en ce que** les potentiels de masse (GND1, GND2, GND3, GND4) des deuxièmes unités électroniques (2) sont raccordés à différents potentiels du système de batterie (7).
